# FASCICULE DE BREVET EUROPEEN

(11) **EP 0 881 401 B1**
(45) Date de publication et mention de la délivrance du brevet: **13.11.2002**
(21) Numéro de dépôt: 98401269.0
(22) Date de dépôt: 28.05.1998
(51) Int. Cl.: F16B 37/12

(54) **Dispositif de fixation taraudé**
Schraubverbindung
Threaded connecting device

(30) Priorité: 29.05.1997 FR 9706579
(43) Date de publication de la demande: 02.12.1998
(73) Titulaire: GIAT INDUSTRIES, 78000 Versailles (FR)
(72) Inventeur: Letizia, Didier, 78450 Villepreux (FR); Mallat, Didier, 28320 Gallardon (FR)
(74) Mandataire: Célanie, Christian

(56) Documents cités:
- DE-U- 8 913 654
- GB-A- 2 143 309

## Description

La présente invention concerne un dispositif de fixation d'un matériel quelconque sur une paroi, par exemple, d'un véhicule, et concerne plus généralement des dispositifs de fixation d'éléments et/ou de matériels de natures diverses sur une paroi de forme quelconque.

Pour fixer un élément ou un matériel sur une paroi métallique ou non, on utilise couramment des moyens de fixation tels que des vis, des rivets, ... ou de la colle. On peut également prévoir des pattes de fixation soudées sur la paroi.

Tous ces moyens de fixation connus ne sont utilisables que d'un seul côté de la paroi. Si on désire fixer un élément de l'autre côté de la paroi, il est nécessaire de procéder d'une manière identique, ce qui augmente les points d'intervention sur la paroi.

Le document DE-U-8913 654 montre une vis vissée dans un taraudage débouchant pratiqué dans une paroi, la vis étant munie d'un taraudage traversant, qui est utilisable de l'un et de l'autre côté de la paroi pour recevoir un moyen de blocage.

Le but de la présente invention est de fournir un dispositif de fixation permettant de fixer un élément de chaque côté de la paroi en une seule intervention.

A cet effet, l'invention propose un dispositif de fixation d'un matériel sur une paroi par exemple d'un véhicule, constitué d'un élément d'assemblage vissé dans un taraudage débouchant pratiqué dans l'épaisseur de la paroi, cet élément étant muni de part et d'autre d'un taraudage borgne destiné à recevoir un moyen de blocage dudit matériel.

L'élément d'assemblage se présente sous la forme générale d'une vis avec une tête pour assurer la fixation directe du matériel sur la paroi.

L'invention concerne également une utilisation du dispositif de fixation à l'obtention d'un blindage de la paroi d'un véhicule, application qui est caractérisée en ce que l'on fixe du côté extérieur une plaque de surprotection par vissage dans le taraudage correspondant de l'élément d'assemblage.

Selon cette utilisation, on peut fixer du côté intérieur une première plaque de pare-éclats directement contre la paroi à l'aide de l'élément d'assemblage, une seconde plaque pouvant être fixée côté intérieur par vissage dans le taraudage correspondant de l'élément d'assemblage, la première et la seconde plaque étant espacées l'une de l'autre d'une distance correspondant à l'épaisseur de la tête de l'élément d'assemblage.

Un tout premier avantage de la présente invention réside dans la réduction du nombre d'interventions à effectuer de part et d'autre de la paroi pour fixer un matériel.

Un autre avantage de l'invention réside dans la variété des combinaisons possibles dans le choix des éléments ou matériels susceptibles d'être fixés sur la paroi.

Un autre avantage de l'invention réside dans la réduction du coût de la fixation des éléments, et dans les évolutions d'aménagements possibles qui ne nécessitent aucune adaptation particulière.

D'autres avantages, caractéristiques et détails de l'invention ressortiront à la lecture du complément de description qui va suivre de modes de réalisation donnés à titre d'exemples en relation avec les dessins annexés sur lesquels :
- la figure 1 est une vue en coupe transversale pour illustrer la structure d'un dispositif de fixation selon l'invention, et,
- les figures 2 et 3 montrent la réalisation de différents assemblages.

On va décrire ci-après et à titre d'exemple la fixation d'un certain nombre de plaques planes sur une paroi sensiblement plane. Il va s'en dire que la paroi et les plaques peuvent avoir une forme et des dimensions quelconques.

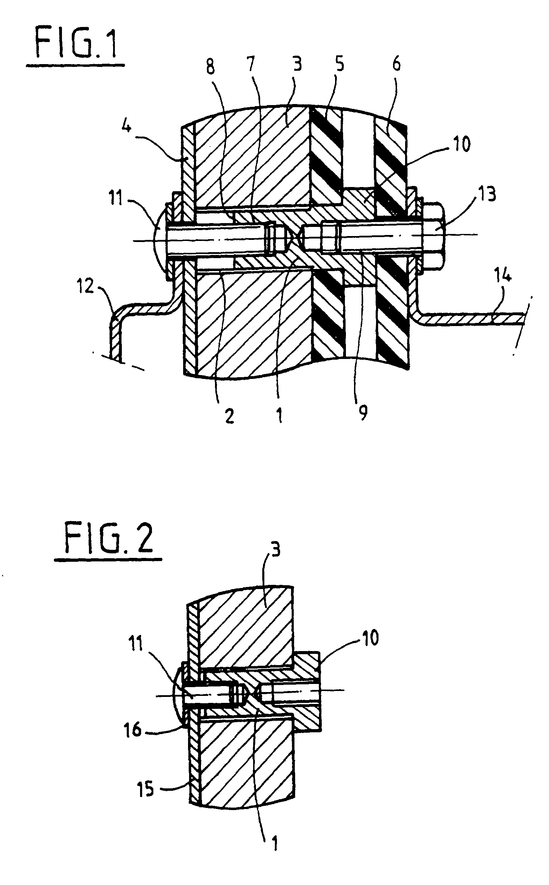

Sur la figure 1, on a représenté un élément d'assemblage 1 vissé dans un taraudage traversant 2 pratiqué transversalement dans une paroi 3 et débouchant de part et d'autre de celle-ci. La paroi 3 peut être par exemple la paroi d'un véhicule militaire sur lequel on vient fixer, côté extérieur, une plaque 4 et, côté intérieur, des plaques 5 et 6.

A cette fin, l'élément d'assemblage 1 se présente sous la forme d'une vis munie d'un premier taraudage borgne 7 débouchant au niveau de son extrémité 8, et d'un second taraudage borgne 9 débouchant au niveau d'une tête 10 de l'élément d'assemblage 1. Les taraudages 7 et 9 sont axialement alignés, mais ils peuvent être disposés de manière différente.

La plaque 4 est alors fixée sur la paroi 3 à l'aide d'un moyen de blocage tel qu'une vis 11 vissée dans le taraudage 7. Eventuellement, on peut prévoir un accessoire 12 maintenu par la vis 11. La plaque 5 est fixée à la paroi 3 à l'aide de l'élément d'assemblage 1 dont la tête 10 vient prendre appui sur ladite plaque 5. La plaque 6 est fixée à l'aide d'un moyen de fixation telle une vis 13 vissée dans le taraudage 9 de l'élément d'assemblage 1. On peut éventuellement prévoir un second accessoire 14 maintenu, côté intérieur, par la vis 13.

Dans le cas d'un véhicule militaire que l'on veut protéger, la plaque 4 est une surprotection extérieure qui peut être passive ou réactive. La nature de cette plaque 4 est quelconque, homogène ou combinée. Les plaques 5 et 6 utilisées seules ou en combinaison sont des pare-éclats quelle que soit la nature du matériau les constituant.

L'élément d'assemblage 1 peut être en acier inoxydable ou en toute autre nuance d'acier compatible avec le matériau de la paroi 3 en aluminium ou en titane.

Bien entendu, lors du vissage de l'élément d'assemblage 1, on utilise un produit d'étanchéité afin d'interdire l'infiltration de produits, éventuellement dangereux, à l'intérieur du véhicule.

On peut ainsi utiliser un grand nombre de protections internes et externes en ajustant les dimensions de l'élément d'assemblage 1. De même, le nombre des éléments 1 varie en fonction de la masse à fixer et de la structure porteuse.

La figure 2 illustre la fixation d'une plaque 15 constituant une protection extérieure de la paroi 3. La longueur de l'élément d'assemblage 1 est légèrement inférieure à l'épaisseur de la paroi 3 pour que, lorsque sa tête 10 est appliquée contre la surface interne de cette paroi, l'extrémité libre affleure au plus la surface externe de cette paroi. Dans cette configuration, la vis 11 de fixation de la plaque 15 est munie d'une rondelle frein 16.

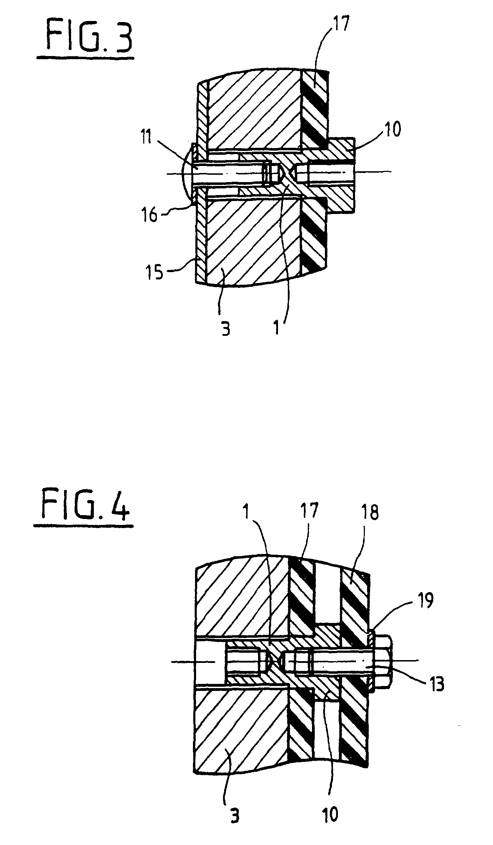

La figure 3 illustre une autre configuration de fixation d'une plaque avec l'élément d'assemblage 1 selon l'invention. Cet élément 1 est tout d'abord vissé dans la paroi 3 pour fixer une plaque 17, la tête 10 étant appliquée sur cette plaque 17. Puis, on fixe la plaque 15 à l'aide de la vis 11, la rondelle 16 venant contre cette plaque pour assurer le freinage. On obtient une configuration avec une plaque 15 de surprotection et une plaque 17 pare-éclats.

Sur la figure 4, on a représenté une configuration selon laquelle on fixe avec l'élément d'assemblage 1 la plaque 17 qui est alors en contact intime avec la paroi 3. Puis, on fixe la plaque 18 à l'aide de la vis 13, en disposant une rondelle de freinage 19. Les plaques 17 et 18 sont espacées l'une de l'autre d'une distance égale à l'épaisseur de la tête 10 de l'élément d'assemblage. La configuration ainsi obtenue peut être utilisée lorsque seuls des pare-éclats sont nécessaires, c'est-à-dire lorsque la protection offerte par la paroi 3 est en elle-même suffisante.

Suivant les configurations décrites en relation avec les figures 1 et 4, les plaques pare-éclats 5 et 6 ou 17 et 18 sont placées à une certaine distance l'une de l'autre.

Ces deux plaques 5 et 6 ou 17 et 18 peuvent être placées l'une contre l'autre ; dans ce cas, la tête 10 de l'élément d'assemblage 1 est effacée dans un logement pratiqué dans la plaque 5 ou 17, par exemple. Le centrage de la première plaque 5 ou 17 est alors réalisé par la tête même de la vis 1, de forme cylindrique .

L'invention permet ainsi la fixation de toutes sortes de surprotections extérieures en modifiant de manière évidente les dimensions de l'élément d'assemblage 1. Cet élément 1 prédispose la paroi 3 d'un véhicule pour installer toute sorte de combinaisons incorporant indifféremment des surprotections extérieures ou non, des pare-éclats mono ou multicouches, des équipements à l'extérieur comme à l'intérieur. On regroupe ainsi plusieurs fonctionnalités en réduisant les coûts et les opérations de fabrication au stade élémentaire de la tôle de structure. Ainsi, on évite le retournement de la plaque lors des opérations d'usinage. Le concept permet des évolutions d'aménagement (position des équipements) sans retoucher à la structure grâce au maillage de départ.

## Revendications

1. Dispositif de fixation d'un matériel sur une paroi, par exemple d'un véhicule, constitué d'un élément d'assemblage (1) vissé dans un taraudage débouchant (2) pratiqué dans l'épaisseur de la paroi (3), ledit élément d'assemblage (1) étant muni de part et d'autre d'un taraudage borgne (7, 9) destiné à recevoir un moyen de blocage (11 ; 13) dudit matériel (4 ; 5 ; 6 ; 12 ; 14 ; 15 ; 17 ; 18).

2. Dispositif de fixation selon la revendication 1, **caractérisé en ce que** l'élément d'assemblage (1) se présente sous la forme générale d'une vis avec une tête (10) pour assurer la fixation directe dudit matériel sur la paroi (3).

3. Utilisation du dispositif de fixation selon la revendication 1 ou 2, à l'obtention d'un blindage de la paroi d'un véhicule, **caractérisé en ce que** l'on fixe côté extérieur une plaque de surprotection (4 ; 15) par vissage dans le taraudage borgne (7) correspondant de l'élément d'assemblage (1).

4. Utilisation selon la revendication 3, **caractérisé en ce que** l'on fixe, côté intérieur, une première plaque (5) de pare-éclats à l'aide de l'élément d'assemblage (1) directement contre la paroi (3).

5. Utilisation selon la revendication 4, **caractérisé en ce que** l'on fixe, côté intérieur, une seconde plaque (6 ; 18) par vissage dans le taraudage borgne (9) correspondant de l'élément d'assemblage (1), la première et la seconde plaque (5, 6) étant espacées l'une de l'autre d'une distance correspondant à l'épaisseur de la tête (10) de l'élément d'assemblage (1).

## Claims

1. A device to fix a material onto a wall, for example a vehicle wall, constituted by an assembling element (1) screwed in an open-ended female screw cutting (2) made in the thickness of the wall (3), said assembling element (1) being provided on either side with a closed-ended female screw cutting (7, 9) intended to receive locking means for said material (4, 5, 6, 12, 14, 15, 17, 18).

2. A fixing device according to Claim 1, wherein the assembling element (1) is in the form of a screw with a head (10) so as to ensure the direct fixing of said material on the wall (3).

3. The use of a fixing device according to Claims 1 or 2 to obtain the armouring of a vehicle wall, wherein a plate (4, 15) of over-protection is fixed to the outer side by screwing in the matching closed-ended female screw cutting (7) in the assembling element (1).

4. Use according to Claim 3, wherein a first splinterproof plate (5) is fixed to the inside by means of the assembling element (1) directly against the wall (3).

5. Use according to Claim 4, wherein a second plate (6, 18) is fixed to the inside by screwing in the matching closed-ended female screw cutting in the assembling element (1), the first and second plates (5, 6) being spaced from one another by a distance corresponding to the thickness of the head (10) of the assembling element (1).

## Patentansprüche

1. Vorrichtung zur Befestigung eines Materials an einer Wandung, zum Beispiel eines Fahrzeuges, welche aus einem Verbindungselement (1) besteht, das in ein durch die Dicke der Wandung (3) hindurch angebrachtes Innengewinde (2) geschraubt ist, wobei das genannte Verbindungselement (1) beiderseits mit einem Sackgewinde (7, 9) ausgerüstet ist, das dazu bestimmt ist, ein Mittel (11; 13) zum Halten des genannten Materials (4; 5; 6; 12; 14; 15; 17; 18) aufzunehmen.

2. Vorrichtung zur Befestigung nach Anspruch 1, **dadurch gekennzeichnet, dass** das Verbindungselement (1) stellt sich in allgemeiner Form als eine Schraube mit einem Kopf (10) dar, um die direkte Befestigung des genannten Materials an der Wandung (3) zu gewährleisten.

3. Verwendung der Befestigungsvorrichtung nach Anspruch 1 oder 2 zur Erzielung einer Panzerung der Wandung eines Fahrzeuges, **dadurch gekennzeichnet, dass** man an der Außenseite eine Überschutz-Platte (4; 15) durch Verschrauben in dem entsprechenden Innengewinde (7) des Verbindungselementes (1) befestigt.

4. Verwendung nach Anspruch 3, **dadurch gekennzeichnet, dass** man an der Innenseite eine erste Schild-Platte (5) mit Hilfe des Verbindungselementes (1) direkt an der Wandung (3) befestigt.

5. Verwendung nach Anspruch 4, **dadurch gekennzeichnet, dass** man an der Innenseite eine zweite Platte (6; 18) durch Verschrauben in dem entsprechenden Innengewinde (9) des Verbindungselementes (1) befestigt, wobei die erste und die zweite Platte (5, 6) mit einem Zwischenraum unter einander angeordnet sind, mit einem Abstand, der der Dicke des Kopfes (10) des Verbindungselementes (1) entspricht.
